# FASCICULE DE BREVET EUROPEEN

(11) **EP 1 635 729 B1**
(45) Date de publication et mention de la délivrance du brevet: **30.11.2011**
(21) Numéro de dépôt: 04767200.1
(22) Date de dépôt: 28.05.2004
(51) Int. Cl.: A61C 3/02, A61C 5/02

(54) **INSTRUMENT DENTAIRE MECANISE**
MECHANISIERTES DENTALINSTRUMENT
MECHANISED DENTAL INSTRUMENT

(30) Priorité: 12.06.2003 FR 0307090
(43) Date de publication de la demande: 22.03.2006
(73) Titulaire: Micro-Mega International Manufactures, Société Anonyme, 25000 Besancon (FR)
(72) Inventeur: EUVRARD, Hubert, 25000 Besançon (FR)
(74) Mandataire: Poupon, Michel
(86) Numéro de dépôt international: PCT/FR2004/001323
(87) Numéro de publication internationale: WO 2005/004741

(56) Documents cités:
- FR-A- 2 759 574
- US-A- 5 941 705

## Description

La présente invention concerne un instrument dentaire mécanisé, notamment un instrument d'endodontie.

De manière générale, les instruments dentaires mécanisés sont constitués d'une partie active et d'un manche disposé à l'extrémité opposée à ladite partie active. Ledit manche de l'instrument dentaire est pourvu d'un moyen d'entraînement en rotation susceptible d'engrener en position de montage dans une tête d'une pièce à main directement avec un moyen d'entraînement en rotation situé en amont de la tête de la pièce à main, tel que décrit notamment dans la demande de brevet FR 2 759 574, déposée par la présente demanderesse.

De tels instruments dentaires sont généralement réalisés partiellement en matériau plastique par surmoulage sur la partie active. L'inconvénient majeur d'un tel procédé de réalisation est la résistance des dents des pignons sous des couples importants entraînant soit une rupture soit une usure prématurée desdites dents.

Le but de l'invention est de proposer un instrument dentaire mécanisé qui permet de résoudre tout ou partie des inconvénients précités.

A cet effet, la présente invention a pour objet un instrument dentaire mécanisé constitué d'une partie active et d'un manche disposé à l'extrémité opposée à ladite partie active, ledit manche de l'instrument dentaire étant pourvu d'un moyen d'entraînement en rotation susceptible d'engrener en position de montage dans une tête d'une pièce à main directement avec un moyen d'entraînement en rotation situé en amont de la tête de la pièce à main, caractérisé en ce que le moyen d'entraînement est réalisé à partir d'une pièce métallique plate rendue solidaire, notamment par emmanchement sur l'axe de la partie active, ladite pièce étant munie d'au moins une ouverture conformée de telle sorte à permettre la circulation de la matière plastique formant le manche lors de la phase de surmoulage sur ledit axe et à assurer ainsi la liaison du moyen d'entraînement en rotation sur l'axe.

Selon une variante de réalisation, ladite ouverture est formée par l'association de méplats réalisés sur l'axe de la partie active et l'orifice central du moyen d'entraînement permettant l'introduction de l'axe à travers cette dernière.

Selon une caractéristique avantageuse, le moyen d'entraînement est obtenu à partir d'une pièce plate dont la denture est réalisée par découpage puis éventuellement pliage.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue en coupe d'un instrument dentaire mécanisé selon la présente invention,
- la figure 2 est une vue similaire à la figure 1 illustrant une variante de réalisation,
- la figure 3 est une vue en coupe d'un pignon pour instrument dentaire mécanisé,
- la figure 4 est une vue en coupe d'un instrument dentaire mécanisé illustrant une seconde variante de réalisation,
- la figure 5 représente une troisième variante de réalisation de l'instrument dentaire selon l'invention,
- la figure 6 est une vue en coupe de l'instrument dentaire selon l'invention selon une quatrième variante de réalisation.

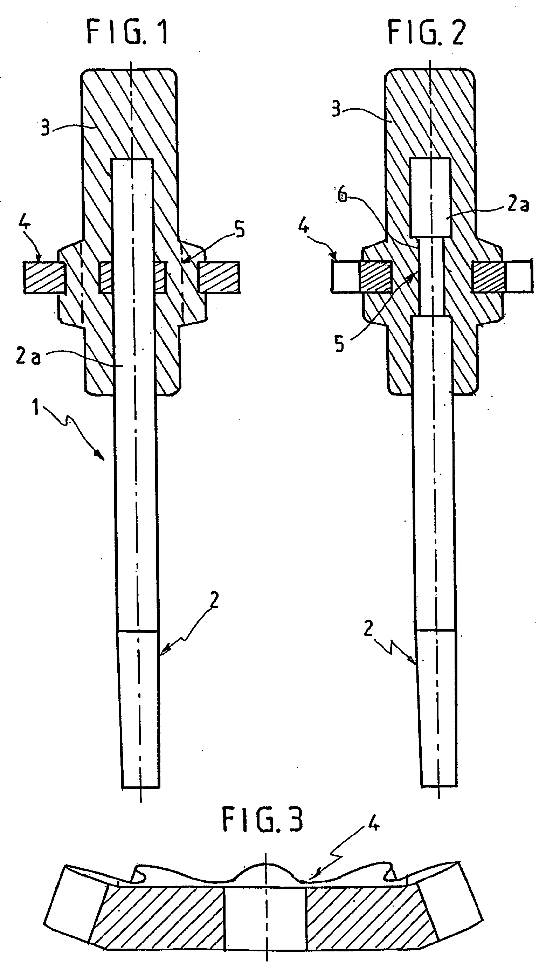

On a représenté à la figure 1, un instrument dentaire mécanisé d'endodontie 1. Cet instrument est constitué, de manière classique, d'une partie active 2 et d'un manche 3 disposé à l'extrémité opposée à ladite partie active 2, désignée dans la suite de la description « axe » 2a.

Ce manche 3 de l'instrument dentaire 1 est pourvu d'un moyen d'entraînement 4 en rotation, du type pignon, engrenant en position de montage dans une tête de la pièce à main directement avec un moyen d'entraînement en rotation situé en amont de la tête de la pièce à main.

Selon la présente invention, le moyen d'entraînement 4 est réalisé à partir d'une pièce métallique plate rendue solidaire, notamment par emmanchement sur l'axe 2a, ladite pièce étant munie d'au moins une ouverture 5 conformée de telle sorte à permettre la circulation de la matière plastique formant le manche 3 lors de la phase de surmoulage sur ledit axe 2a et à assurer ainsi la liaison du moyen d'entraînement en rotation sur l'axe 2a.

Comme visible à la figure 1, la partie métallique 4 formant le moyen d'entraînement est pourvu de quatre orifices 5 régulièrement répartis permettant la circulation du plastique lors du surmoulage du manche 3 sur l'axe 2a de la partie active.

Selon une variante de réalisation représentée à la figure 2, l'axe 2a de la partie active 2 comporte des méplats 6 permettant ainsi, après positionnement de la pièce métallique, de surmouler la formation dudit manche de telle manière que le plastique englobe les méplats 6 à travers les ouvertures 5 et assure ainsi la liaison en rotation.

Il convient de noter, avantageusement, que la partie métallique 4 est réalisée à partir d'une pièce plate puis par découpage des dents formant le moyen d'entraînement assurant ainsi une réduction du coût par rapport à une solution classique, comme visible sur la figure 3.

En outre, lorsqu'il est nécessaire d'assurer l'entraînement en rotation par un couple de pignon conique, la denture du pignon est déformée de manière à ce que celle-ci soit relevée ou abaissée par rapport à son âme.

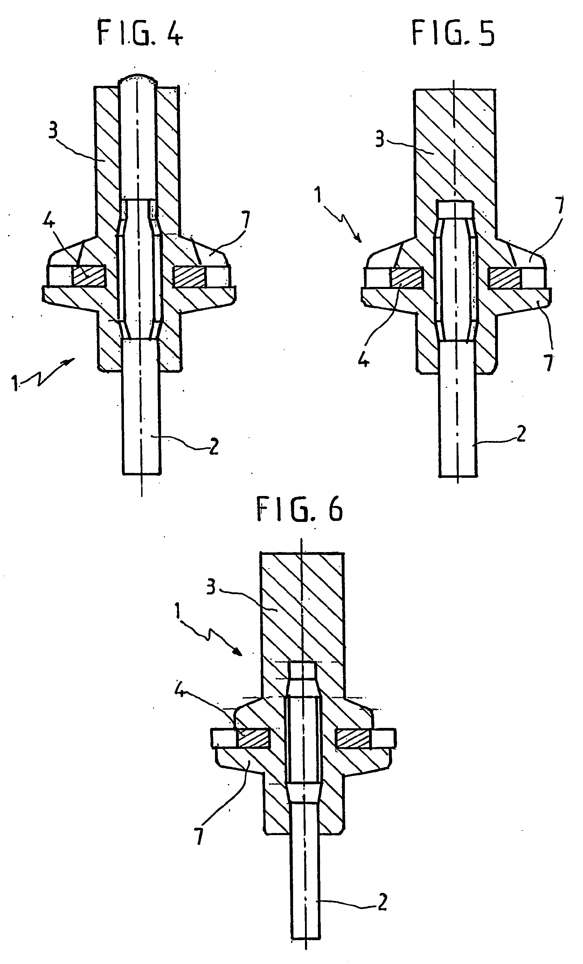

Selon une seconde variante de réalisation de l'invention représentée à la figure 4, la partie active 2, à savoir l'outil dentaire, traverse le manche 3 de l'instrument dentaire 1 de part en part.

Les variantes de réalisation de l'instrument dentaire 1 représentées aux figures 5 et 6 montrent une protubérance 7 au niveau de la partie supérieure du manche 3. Cette protubérance entoure la pièce métallique 4 du moyen d'entraînement des deux côtés comme on peut le voir sur la figure 5 ou seulement sur sa partie inférieure comme il est représenté sur la figure 6. Cette protubérance assure le captage d'une force et / ou un courant.

On comprend à la lecture de la description ci-dessus que l'instrument dentaire selon la présente invention est relativement simple à réaliser et permet d'offrir une plus grande résistance au moyen d'entraînement.

Bien que l'invention ait été décrite en liaison avec deux modes de réalisation particuliers elle comprend tous les équivalents techniques des moyens décrits.

## Revendications

1. Instrument dentaire mécanisé constitué d'une partie active (2) et d'un manche (3) disposé à l'extrémité opposée à ladite partie active, ledit manche (3) de l'instrument dentaire étant pourvu d'un moyen d'entraînement (4) en rotation susceptible d'engrener en position de montage dans une tête d'une pièce à main directement avec un moyen d'entraînement en rotation situé en amont de la tête de la pièce à main, **caractérisé en ce que** le moyen d'entraînement (4) est réalisé à partir d'une pièce métallique plate rendue solidaire, notamment par emmanchement sur l'axe (2a) de la partie active (2), ladite pièce étant munie d'au moins une ouverture (5) conformée de telle sorte à permettre la circulation de la matière plastique formant le manche (3) lors de la phase de surmoulage sur ledit axe (2a) et à assurer ainsi la liaison du moyen d'entraînement en rotation sur l'axe (2a).

2. Instrument dentaire mécanisé selon la revendication 1, **caractérisé en ce que** l'ouverture (5) est formée par l'association de méplats (6) réalisés sur l'axe (2a) de la partie active (2) et un orifice centrale du moyen d'entraînement (4).

3. Instrument dentaire mécanisé selon la revendication 1 ou 2, **caractérisé en ce que** le moyen d'entraînement (4) est obtenu à partir d'une pièce plate dont la denture est réalisée par découpage puis éventuellement pliage.

4. Instrument dentaire mécanisé selon l'une des revendications précédentes, **caractérisé en ce que** la partie active 2 traverse le manche 3 de part en part.

5. Instrument dentaire mécanisé selon l'une des revendications précédentes, **caractérisé en ce que** la protubérance 7 de la partie supérieure du manche 3 capte un courant.

6. Instrument dentaire mécanisé selon l'une des revendications 1, 2, 3 ou 4, **caractérisé en ce que** la protubérance 7 de la partie supérieure du manche 3 capte une force.

7. Instrument dentaire mécanisé selon l'une des revendications 1, 2, 3 ou 4, **caractérisé en ce que** la protubérance 7 de la partie supérieure du manche 3 capte un courant et une force.

## Claims

1. Mechanised dental instrument consisting of an active part (2) and a sleeve (3) arranged at the end opposite said active part, said sleeve (3) of the dental instrument being provided with a rotary drive means (4), which, in a mounted position in a head of a hand piece, is able to mesh directly with a rotary drive means located upstream of the head of the hand piece, **characterised in that** the drive means (4) is produced from a flat metal piece which is joined, particularly by fitting onto the axis (2a) of the active part (2), said piece being provided with at least one opening (5) which is shaped in such a way as to allow the circulation of the plastic material forming the sleeve (3) during the overmoulding phase on said axis (2a) and thus to ensure the connection of the rotary drive means to the axis (2a).

2. Mechanised dental instrument according to claim 1, **characterised in that** the opening (5) is formed by the association of flats (6) formed on the axis (2a) of the active part (2) and a central opening of the drive means (4).

3. Mechanised dental instrument according to claim 1 or 2, **characterised in that** the drive means (4) is produced from a flat piece, the toothing of which is formed by cutting and then possibly bending.

4. Mechanised dental instrument according to one of the preceding claims, **characterised in that** the active part (2) traverses the sleeve (3) from one end to the other.

5. Mechanised dental instrument according to any one of the preceding claims, **characterised in that** the protuberance (7) of the upper part of the sleeve (3) captures a current.

6. Mechanised dental instrument according to any one of claims 1, 2, 3 or 4, **characterised in that** the protuberance (7) of the upper part of the sleeve (3) captures a force.

7. Mechanised dental instrument according to any one of claims 1, 2, 3 or 4, **characterised in that** the protuberance (7) of the upper part of the sleeve (3) captures a current and a force.

## Patentansprüche

1. Mechanisch angetriebenes zahnärztliches Instrument, das durch einen aktiven Teil (2) und durch einen Handgriff (3) gebildet ist, der an dem dem aktiven Teil gegenüber liegenden Ende angeordnet ist, wobei der Handgriff (3) des zahnärztlichen Instrumentes mit einem drehbaren Antriebsmittel (4) ausgestattet ist, das dazu eingerichtet ist, in einer in dem Kopf des Handstückes angeordneten Montageposition direkt mit einem Drehantriebsmittel in Eingriff zu kommen, das rückseitig des Kopfes des Handstückes angeordnet ist, **dadurch gekennzeichnet, dass** das Antriebsmittel (4) ausgehend von einem flachen Metallstück einstückig, nämlich durch Aufstecken auf die Achse (2a) des aktiven Teiles (2), ausgebildet ist, wobei das Stück mit wenigstens einer Ausnehmung (5) ausgestattet ist, die so ausgestaltet ist, dass das Fließen von den Handgriff (3) bildendem Kunststoffmaterial während der Überformphase der Achse (2a) gestattet und somit die Verbindung des Antriebsmittels mit der Drehachse (2a) sichergestellt ist.

2. Mechanisch angetriebenes zahnärztliches Instrument nach Anspruch 1, **dadurch gekennzeichnet, dass** die Ausnehmung (5) durch einen Verbund von Abflachungen (6), die an der Achse (2a) des aktiven Teiles (2) gebildet sind, und einer mittigen Ausnehmung des Antriebsmittels (4) gebildet ist.

3. Mechanisch angetriebenes zahnärztliches Instrument nach Anspruch 1 oder 2, **dadurch gekennzeichnet, dass** das Antriebsmittel (4) ausgehend von einem flachen Stück erhalten ist, dessen Zahnung durch Abtrennen gefolgt von einem bedarfsweisen Falzen hergestellt ist.

4. Mechanisch angetriebenes zahnärztliches Instrument nach einem der vorangehenden Ansprüche, **dadurch gekennzeichnet, dass** das aktive Teil (2) den Handgriff (3) vollständig quert.

5. Mechanisch angetriebenes zahnärztliches Instrument nach einem der vorangehenden Ansprüche, **dadurch gekennzeichnet, dass** der Vorsprung (7) des über dem Handgriff (3) liegenden Teiles durch Formschluss greift.

6. Mechanisch angetriebenes zahnärztliches Instrument nach einem der Ansprüche 1, 2, 3 oder 4, **dadurch gekennzeichnet, dass** der Vorsprung (7) des über dem Handgriff (3) liegenden Teiles durch Kraftschluss greift.

7. Mechanisch angetriebenes zahnärztliches Instrument nach einem der Ansprüche 1, 2, 3 oder 4, **dadurch gekennzeichnet, dass** der Vorsprung (7) des über dem Handgriff (3) liegenden Teiles durch Formschluss und durch Kraftschluss greift.
